# EUROPEAN PATENT APPLICATION

(11) **EP 1 588 631 A1**
(43) Date of publication of application: **26.10.2005**
(21) Application number: 04704711.3
(22) Date of filing: 23.01.2004
(51) Int. Cl.: A23L 3/3508, A23L 3/3571, A21D 13/00

(54) **METHOD OF IMPROVING STORAGE PROPERTIES OF FOODS AND DRINKS**

(30) Priority: 23.01.2003 JP 2003014207
(71) Applicant: Kyowa Hakko Food Specialties Co., Ltd., Tokyo 100-8185 (JP)
(72) Inventor: ITOH, Takayuki c/o Food Creation Center, Ibaraki 300-0398 (JP); SUENAGA, Arat c/0 Food Creation Center, Ibaraki 300-0398 (JP); INOUE, Seijir c/0Kyowa Hakko Food Spec. Co.,Ltd, Chiyode-ku Tokyo 100-8185 (JP)
(74) Representative: Vossius & Partner
(86) International application number: PCT/JP2004/000592
(87) International publication number: WO 2004/064545

(57) **Abstract**

The present invention relates to food and drink and an agent for improving the keeping quality of food and drink comprising a lipase-treated matter of oil and fat, a method for improving the keeping quality of food and drink by adding the treated matter, and a method for producing food and drink which comprises adding the treated matter to food and drink.

## Description

### Technical Field

The present invention relates to food and drink, an agent for improving the keeping quality of food and drink, a method for improving the keeping quality of food and drink, and a method for producing food and drink.

### Background Art

Addition of preservatives is one of the methods for preventing putrefaction of foods by microorganisms.

As preservatives, chemical compounds such as benzoic acid or its sodium salt, sorbic acid or its potassium salt, sodium dehydroacetate, paraoxybenzoic acid esters, and propionic acid or its calcium or sodium salt are used.

However, among chemical compounds, there are some that have toxicity, though having antifungal activity, such as benzoic acid, benzoic acid derivatives, sorbic acid and sorbic acid derivatives; some that have low toxicity but may deteriorate the flavor of food and drink depending upon the amount used or the kind of food and drink; and further some that influence the productivity of food and drink in certain cases.

As natural substances, storax extract, Artemisia capillaries extract, milt protein, pectin hydrolyzate, Magnolia obovata extract, ε-polylysine, forsythia extract and the like are used.

However, natural substances generally have poor activity against fungi such as molds.

Further, organic acids such as acetic acid, sodium acetate and propionic acid, ethanol, sugar alcohols and the like are used to serve as a preservative. In bread making, for example, sodium acetate is used usually to serve as a preservative.

However, organic acids, ethanol and sugar alcohols also may influence foods and drinks depending upon the amount used.

On the other hand, it is known that lactic acid bacteria which have been used for food and drink from a long time ago produce substances having antibacterial and antifungal activities. Examples of known substances produced by lactic acid bacteria and having antifungal activity include acetic acid, caproic acid, formic acid, propionic acid, butyric acid, valeric acid, sorbic acid and benzoic acid and their derivatives (see Applied Microbiology and Biotechnology, 1998, Vol. 50, p. 253-256 and Food Microbiology and Safety, 2002, Vol. 67, p. 2271-2277); protein-like substances (see Applied and Environmental Microbiology, 2001, Vol. 67, p. 1-5); and 4-hydroxyphenyl lactic acid (see Applied and Environmental Microbiology, 2000, Vol. 66, p. 4084-4090).

However, caproic acid, for example, which is considered to be the main component of an antifungal substance produced by Lactobacillus sanfrancisco CB1, one of lactic acid bacteria (see Applied Microbiology and Biotechnology, 1998, Vol. 50, p. 253-256), may deteriorate the flavor of food and drink when added to the food and drink in large quantities.

### Disclosure of the Invention

An object of the present invention is to provide food and drink, an agent for improving the keeping quality of food and drink, a method for improving the keeping quality of food and drink, and a method for producing food and drink.

The present invention relates to the following (1) to (27).
(1) An agent for improving the keeping quality of food and drink, which contains a lipase-treated matter of oil and fat.
(2) The agent for improving the keeping quality according to the above (1), wherein the oil and fat is animal oil and fat or vegetable oil and fat.
(3) The agent for improving the keeping quality according to the above (2), wherein the animal oil and fat is milk fat.
(4) The agent for improving the keeping quality according to the above (2), wherein the vegetable oil and fat is coconut oil.
(5) The agent for improving the keeping quality according to any one of the above (1) to (4), which contains an acid or a culture of a lactic acid bacterium or a treated matter thereof.
(6) The agent for improving the keeping quality according to any one of the above (1) to (5), wherein the food and drink is bread.
(7) The agent for improving the keeping quality according to any one of the above (1) to (6), wherein the agent for improving the keeping quality is an anti-mold agent.
(8) A food and drink comprising the agent for improving the keeping quality according to any one of the above (1) to (7) added thereto.
(9) A method for improving the keeping quality of food and drink, which comprises adding a lipase-treated matter of oil and fat to the food and drink.
(10) The method according to the above (9), wherein the oil and fat is animal oil and fat or vegetable oil and fat.
(11) The method according to the above (10), wherein the animal oil and fat is milk fat.
(12) The method according to the above (10), wherein the vegetable oil and fat is coconut oil.
(13) The method according to any one of the above (9) to (12), which comprises adding an acid or a culture of a lactic acid bacterium or a treated matter thereof.
(14) The method according to any one of the above (9) to (13), wherein the food and drink is bread.
(15) The method according to any one of the above (9) to (14), wherein the method for improving the keeping quality is an anti-mold method.
(16) A method for producing food and drink, which comprises adding a lipase-treated matter of oil and fat to the food and drink.
(17) The method according to the above (16), wherein the oil and fat is animal oil and fat or vegetable oil and fat.
(18) The method according to the above (17), wherein the animal oil and fat is milk fat.
(19) The method according to the above (17), wherein the vegetable oil and fat is coconut oil.
(20) The method according to any one of the above (16) to (19), which comprises adding an acid or a culture of a lactic acid bacterium or a treated matter thereof.
(21) The method according to any one of the above (16) to (20), wherein the food and drink is bread.
(22) A food and drink obtained by the method according to any one of the above (16) to (21).
(23) Bread containing a lipase-treated matter of oil and fat.
(24) The bread according to the above (23), wherein the oil and fat is animal oil and fat or vegetable oil and fat.
(25) The bread according to the above (24), wherein the animal oil and fat is milk fat.
(25) The bread according to the above (24), wherein the animal oil and fat is milk fat.
(26) The bread according to the above (24), wherein the vegetable oil and fat is coconut oil.
(27) The bread according to any one of the above (23) to (26) containing an acid or a culture of a lactic acid bacterium or a treated matter thereof.

The oil and fat used in the present invention may be any of oils and fats usually used for food, and animal oils and fats and vegetable oils and fats are preferably used.

Examples of animal oils and fats are milk fats, beef tallow, lard and fish oil, and milk fats are preferably used. Examples of milk fats are those derived from cow, sheep, goat and buffalo.

Examples of vegetable oils and fats are coconut oil, palm oil, palm kernel oil, rapeseed oil, soybean oil, corn oil, rice bran oil, safflower oil, sesame oil, cottonseed oil, olive oil, sunflower oil and peanut oil. Among these, coconut oil, palm oil and palm kernel oil are preferably used, and coconut oil is particularly preferably used.

The animal oil and fat and vegetable oil and fat may be prepared according to conventional methods for use, and commercially available products thereof may also be used.

The animal oil and fat and vegetable oil and fat may be used either alone or in combination.

As lipase, any lipase can be used such as animal-derived or microorganism-derived lipases so long as it has triacylglycerol lipase (E.C.3.1.1.3) activity.

Examples of animal-derived lipases are pig kidney-derived lipase and lipase derived from the pharynx of sheep, cow or goat.

Examples of microorganism-derived lipases are those derived from microorganisms belonging to the genera Mucor, Rizopus, Candida, Aspergillus, Arthrobacter, Pseudomonas and Chromobacterium.

These lipases may be prepared according to conventional methods for use, and commercially available lipases may also be used.

Although lipase may be a purified product, matters containing the enzyme such as a culture of a microorganism having triacylglycerol lipase activity, treated matters of the culture, cells and tissues of animals and plants having triacylglycerol lipase activity, a culture thereof and treated matters of the culture may also be used as lipase.

The treated matters of a culture include concentrated culture, dried culture, cells obtained by centrifuging the culture, products obtained by treating the cells by various means such as drying, treatment with a surfactant, ultrasonication, mechanical friction, treatment with a solvent, enzymatic treatment, protein fractionation and immobilization.

The activity of lipase can be measured, for example, according to the method of measuring glycerol formed by decomposition [J. Biol. Chem., 235, 1912-1916 (1960)]; the method of titrating free fatty acid [J. Biochem., 61, 313-319 (1967)]; and the method of measuring the radioactivity of fatty acid liberated from a labeled substrate [J. Clin. Invest., 59, 185-192 (1977)]. One unit (hereinafter noted as "U") of enzyme activity for lipase is defined as the amount of enzyme which forms 1 µmol of fatty acid in one minute when the enzyme activity is measured in accordance with the method described in Oil Chemistry, 1987, Vol. 36, p. 821.

The lipase-treated matter of oil and fat of the present invention can be obtained by adding lipase to the above oil and fat, thereby carrying out lipase treatment of the oil and fat.

It is preferred to mix oil and fat with water, if necessary, after melting the oil and fat at a temperature above its melting point, so as to make the content of the oil and fat in the mixture 50 to 70wt%. Lipase treatment is carried out, for example, by adding lipase to oil and fat or a mixture of oil and fat with water, preferably followed by emulsification treatment using a homogenizer or the like, and keeping the resulting mixture at a predetermined temperature for a predetermined period of time.

The amount of lipase to be added varies depending upon the kind of oil and fat, treatment conditions, etc. Usually, 10 to 1000 U, preferably 100 to 800 U, more preferably 150 to 500 U of lipase is added per gram of a mixture of oil and fat with water.

The lipase treatment may be carried out at any temperature so long as lipase can show triacylglycerol lipase activity. The temperature of lipase treatment varies depending upon the kind of lipase and that of oil and fat, and is preferably in the vicinity of optimum temperature of the lipase used and at the same time higher than the melting point of the oil and fat used. For example, the temperature is preferably 20 to 50°C, more preferably 30 to 50°C.

The pH for the lipase treatment varies depending upon the kind of lipase and that of oil and fat used. Preferred is pH 2 to 8 and more preferred is pH 3 to 7.

The treatment time varies depending upon the kind of lipase and that of oil and fat used, and is 2 to 120 hours, preferably 12 to 48 hours.

The lipase treatment is carried out by allowing the mixture to stand or with shaking.

After the lipase treatment, the resulting liquid may be used as it is. It is preferred, however, to carry out heat treatment at 50 to 100°C, preferably 60 to 90°C for 5 to 60 minutes to inactivate lipase.

The lipase-treated matter may be used as the lipase-treated matter of oil and fat of the present invention either as it is or after heat treatment, or may be concentrated, dried or purified for use as the lipase-treated matter of oil and fat of the present invention. The lipase-treated matter may be subjected to separation and removal of the cells, etc., if necessary after heat treatment, using a solid-liquid separation method such as separation by precipitation, cake filtration, clarifying filtration, centrifugal filtration, centrifugal precipitation, pressing, separation, or a method using a filter press and, if necessary, further subjected to concentration, drying or purification to be used as the lipase-treated matter of oil and fat of the present invention.

The methods of concentration include concentration by heating, freeze concentration, concentration by reverse osmosis and concentration under reduced pressure, and concentration under reduced pressure is preferably used.

The methods of drying include freeze-drying, natural air drying, hot-air drying, air circulation drying, ventilation drying, spray drying, drying under reduced pressure, sun drying, vacuum drying, spray drying, fluidized bed drying, foam-mat drying and film drying such as drying with drum dryer, the ultrasonic drying method and the electromagnetic wave drying method, and spray drying and freeze-drying are preferably used.

The methods of purification may be any ordinary methods that can purify fatty acids and include liquid-liquid extraction methods, solid-liquid extraction methods, liquid chromatographic methods and the like.

The agent for improving the keeping quality of food and drink of the present invention (hereinafter also referred to as the agent for improving the keeping quality of the present invention) may be the lipase-treated matters of oil and fat of the present invention which may be used as they are, or may also contain an acid or a fermentation product of lactic acid bacteria according to need.

The agent for improving the keeping quality of food and drink of the present invention may be used, for example, as a preservative, a shelf life extender, an anti-mold agent and an antiseptic agent and is preferably used as an anti-mold agent.

The acids may be either inorganic acids or organic acids, and organic acids are preferably used in view of utilization for foods.

Examples of the organic acids are carboxylic acids such as acetic acid, propionic acid, ascorbic acid, fumaric acid, malic acid, tartaric acid and citric acid and their salts, and acetic acid and its salts are preferably used. Examples of the salts are sodium salt and potassium salt.

The culture of lactic acid bacteria includes a culture obtained by culturing a lactic acid bacterium in a medium according to an ordinary method used for the culturing of lactic acid bacteria. The cells or the culture supernatant obtained by separation from the culture according to such methods as centrifugation and filtration may also be used as the culture of lactic acid bacteria.

Examples of the lactic acid bacteria are microorganisms belonging to the genera Lactobacillus, Lactococcus, Streptococcus, Leuconostoc, Pediococcus, Enterococcus and Tetragenococcus, and, for example, those belonging to the genera Lactobacillus and Streptococcus are preferably used. These microorganisms may be used either alone or in combination of two or more kinds.

Examples of the microorganisms belonging to the genus Lactobacillus are those belonging to Lactobacillus bulgaricus, Lactobacillus brevis, Lactobacillus plantarum, Lactobacillus sanfranciscensis, Lactobacillus sanfrancisco, Lactobacillus italicus, Lactobacillus casei, Lactobacillus delbrueckii and Lactobacillus helveticus. Examples of the microorganisms belonging to the genus Lactococcus are those belonging to Lactococcus lactis. Examples of the microorganisms belonging to the genus Streptococcus are those belonging to Streptococcus thermophilus and Streptococcus salivarius. Examples of the microorganisms belonging to the genus Leuconostoc are those belonging to Leuconostoc cremoris. Examples of the microorganisms belonging to the genus Pediococcus are those belonging to Pediococcus acidilactici. Examples of the microorganisms belonging to the genus Enterococcus are those belonging to Enterococcus faecalis. Examples of the microorganisms belonging to the genus Tetragenococcus are those belonging to Tetragenococcus halophilus. Among these microorganisms, Lactobacillus bulgaricus, Lactobacillus italicus, Lactobacillus sanfrancisco, Lactobacillus plantarum and Streptococcus thermophilus, for example, are preferably used.

The treated matters of the culture of lactic acid bacteria include dried products of the culture, the cells or the supernatant of the culture and products obtained by treating the culture or the cells with an enzyme, by ultrasonication or mechanical fracture or with a solvent.

The methods of drying include freeze-drying, natural air drying, hot-air drying, air circulation drying, ventilation drying, spray drying, drying under reduced pressure, sun drying, vacuum drying and the like.

An example of the enzyme used for the enzymatic treatment is lysozyme, which is used by adding to the culture or the cells.

An example of ultrasonication treatment is ultrasonic disruption of the cells using ultrasonic disruptor.

Mechanical fracture includes fracture using, for example, a French press, Manton Gaulin homogenizer and Dyno Mill.

As the solvent used for the solvent treatment, ethanol, methanol and the like are preferably used, and ethanol is more preferably used from the viewpoint of utilization for food and drink. The solvent is used by directly adding to the culture or the cells.

The lactic acid bacteria can be cultured under ordinary culturing conditions for lactic acid bacteria, for example, in a medium containing carbon sources, nitrogen sources, inorganic substances, amino acids, vitamins, etc.

As the medium, any of natural media and synthetic media which contain carbon sources, nitrogen sources, inorganic substances, trace elements, etc. can be used insofar as it is a medium usually used for the culturing of lactic acid bacteria.

Examples of the carbon sources are starch, dextrin, sucrose, glucose, mannose, fructose, raffinose, rhamnose, inositol, lactose, maltose, xylose, arabinose, mannitol, molasses and pyruvic acid, which can be used alone or in combination. The content of the carbon sources is preferably 1 to 40 g/l.

Examples of the nitrogen sources are ammonium salts such as ammonium chloride, ammonium sulfate, ammonium phosphate, ammonium carbonate and ammonium acetate, nitrates such as sodium nitrate and potassium nitrate, and nitrogen-containing organic substances such as peptone, yeast extract, meat extract, malt extract, corn steep liquor, casein hydrolysate, soybean powder, vegetable juice, casamino acid and urea, which can be used alone or in combination. The content of the nitrogen sources is preferably 1 to 20 g/l.

Examples of the inorganic substances are sodium chloride, potassium chloride, calcium chloride, magnesium sulfate, calcium carbonate, dipotassium hydrogenphosphate, potassium dihydrogenphosphate, magnesium phosphate, calcium phosphate, ferrous sulfate, manganese sulfate, zinc sulfate and copper sulfate, which can be used alone or in combination. The content of the inorganic substances is preferably 0.1 to 2 g/l.

Examples of the trace elements are vitamins such as pantothenic acid, biotin, thiamine and nicotinic acid and amino acids such as β-alanine and glutamic acid, which can be used alone or in combination. The content of the trace elements is preferably 0.0001 to 2 g/l.

In addition to the above components, oleic acid, linoleic acid, linolenic acid and ricinoleic acid, their sodium salts, potassium salts or calcium salts, or vegetable oils such as olive oil, cottonseed oil, linseed oil, soybean oil, safflower oil and corn oil may be added to the medium according to need.

Further, milk products such as whole milk, powdered whole milk, skim milk powder and fresh cream, grain flours such as wheat flour, rye flour and rice flour and fruit juice such as apple juice can be used as natural media as they are or by adding the above-mentioned components of the medium according to need.

Culturing is preferably carried out by liquid culturing method, particularly, submerged spinner culturing method.

During the culturing, the pH of the medium is adjusted to 2 to 11, preferably 3 to 10 and more preferably 4 to 8, and culturing is carried out at 10 to 80°C, preferably at 10 to 60°C and particularly preferably at 20 to 40°C usually for 4 hours to 10 days. For the pH adjustment of the medium, sodium hydroxide, aqueous ammonia, ammonium carbonate solution, etc. are used.

The agent for improving the keeping quality of the present invention may further contain food additives such as inorganic salts, nucleic acids, sugars, seasonings, spices and fillers according to need.

Examples of the inorganic salts are sodium chloride, potassium chloride and ammonium chloride. Examples of the nucleic acids are sodium inosinate and sodium guanylate. Examples of the sugars are sucrose, glucose and lactose. Examples of the seasonings are natural seasonings such as soy sauce, miso (soybean paste) and extracts. As the spices, various kinds of spices can be used. Further, examples of the fillers are dextrin which is a starch hydrolysate and various kinds of starches. The amount of these additives used can be properly determined according to the purpose of use, and they can be contained, for example, in an amount of 0.1 to 500 parts by weight per 100 parts by weight of the lipase-treated matter of oil and fat.

The agent for improving the keeping quality of the present invention, which is further mixed with food additives or into which food additives are dissolved according to need, is processed to produce, for example, powders, granules, pellets, tablets and various liquid preparations.

Although the content of the lipase-treated matter of oil and fat in the agent for improving the keeping quality of the present invention is not particularly limited, it is preferred that 5 to 100 parts by weight of the lipase-treated matter of oil and fat is contained per 100 parts by weight of the agent for improving the keeping quality.

Further, when an acid or a culture of a lactic acid bacterium or a treated matter thereof is contained, it is preferred that 0.1 to 20 parts by weight in the case of the acid or 0.1 to 60 parts by weight as the culture of a lactic acid bacterium in the case of the culture of a lactic acid bacterium or the treated matter thereof is contained per 100 parts by weight of the agent for improving the keeping quality.

By adding, to food and drink, the agent for improving the keeping quality of the present invention or the lipase-treated matter of oil and fat and, if necessary, an acid or a culture of a lactic acid bacterium or a treated matter thereof, it is possible to suppress the growth of microorganisms such as bacteria, yeast and fungi to improve the keeping quality of food and drink, and particularly to efficiently suppress the growth of fungi of the genera Aspergillus, Penicillium, etc.

The addition to food and drink may be done at any stage of the production process of the food and drink.

The amount of addition to food and drink is 0.01 to 20 parts by weight, preferably 0.05 to 10 parts by weight as the lipase-treated matter of oil and fat per 100 parts by weight of the food and drink.

Further, when an acid or a culture of a lactic acid bacterium or a treated matter thereof is added, the amount of addition is 0.01 to 1 parts by weight, preferably 0.01 to 0.5 parts by weight in the case of the acid and 0.01 to 20 parts by weight, preferably 0.01 to 10 parts by weight as the culture of a lactic acid bacterium in the case of the culture of a lactic acid bacterium or the treated matter thereof per 100 parts by weight of the food and drink.

The agent for improving the keeping quality of the present invention may be added to any foods and drinks including, for example, bread such as one-loaf bread, rolls, hard bread, sweetened bun and cooked bread; confectionery and snacks such as rice crackers, potato chips and cookies; noodles such as Somen (Japanese fine wheat noodle), Hiyamugi (Japanese fine wheat noodle thicker than Somen), Udon (Japanese wheat noodle), Soba (Japanese buckwheat noodle) and Chinese noodle; seasonings such as miso (soybean paste), soy sauce, sauce, soup stock, dressing, mayonnaise and tomato ketchup; soups such as Japanese clear soup, consommé soup, egg soup, wakame seaweed soup, shark fin soup, potage and miso soup; soups and sauces for noodles; cooked rice products such as rice gruel, porridge of rice and vegetables, and rice with hot tea or hot water poured on it; processed livestock products such as ham, sausages and cheese; processed marine products such as steamed fish paste, dried marine products, salted and fermented fish products, and various kinds of processed marine products suitable for accompaniments for a drink; processed vegetable products such as pickles; and cooked foods such as boiled foods, fried foods, grilled foods and curry. The agent is preferably used for foods and drinks the flavor of which is improved by the addition of oil and fat. An example of food and drink the flavor of which is improved by the addition of oil and fat is bread.

The food and drink may be in the form of powdered food, sheet-shaped food, bottled food, canned food, retort pouch food, encapsulated food, tablet food, fluid food, nutritional drink or the like.

Except for adding the agent for improving the keeping quality of the present invention or the lipase-treated matter of oil and fat and, if necessary, an acid or a culture of a lactic acid bacterium or a treated matter thereof to food and drink, the food and drink can be produced according to ordinary production methods of food and drink.

The food and drink of the present invention can also be produced, for example, by using granulating methods such as fluidized bed granulation, stirring granulation, extrusion granulation, rolling granulation, air stream granulation, compression molding granulation, crushing granulation, spray granulation and jet granulation; coating methods such as pan coating, fluidized bed coating and dry coating; puffing methods such as puff drying, excess vapor method, foam-mat method and microwave-heating method; and extrusion methods using an extrusion granulator or an extruder.

As an example of the method for producing the food and drink of the present invention, a method for making bread is shown below.

For making bread according to the present invention, ordinary bread making methods are used except for adding to dough the agent for improving the keeping quality of the present invention or the lipase-treated matter of oil and fat and, if necessary, an acid or a culture of a lactic acid bacterium or a treated matter thereof.

There are two kinds of typical methods for making one-loaf bread, sweetened bun, etc.; that is, the straight dough method and the sponge and dough method. The former is a method in which all the ingredients of dough are mixed at a time, and the latter is a method in which at first a sponge is made by adding yeast and water to a part of grain flour and, after fermentation, the remaining ingredients are added to the sponge.

However, the methods for making bread are not limited to these.

Examples of the ingredients of dough are grain flours, usually wheat flour, yeast, salt and water, and, if necessary, sugar, skim milk powder, egg, yeast food, shortening and butter.

In the straight dough method, all the ingredients of dough are mixed and kneaded, and the kneaded mixture is fermented at 25 to 30°C for 20 minutes to 4 hours. The fermented dough is then subjected to the following steps: dividing, benching, molding, proofing (25 to 42°C) and baking (170 to 240°C).

In the sponge and dough method, about 30wt% to 100wt% of the grain flour to be used, yeast, yeast food and the like are mixed and kneaded with water to obtain a sponge. The obtained sponge is fermented at 25 to 35°C for 1 to 5 hours, and then mixed and kneaded with the remaining ingredients such as grain flour, water, salt, sugar, skim milk powder, shortening, egg, butter and the like (dough mixing). The resulting dough is further fermented at 25 to 30°C for 20 minutes to 2 hours and then subjected to dividing, benching, molding, proofing (25 to 42°C) and baking (170 to 240°C).

The agent for improving the keeping quality of the present invention or the lipase-treated matter of oil and fat and, if necessary, an acid or a culture of a lactic acid bacterium or a treated matter thereof may be added at any stage of the bread making process.

For example, in the case of the straight dough method, they may be added to the ingredients of dough before preparing dough, or may be added at the time of mixing and kneading of dough after the ingredients are mixed. In the case of the sponge and dough method, they may be added to the ingredients before preparing a sponge, at the time of mixing and kneading of a sponge, or to dough at the time of dough mixing after preparation of a sponge.

Although the amount of the agent for improving the keeping quality of the present invention or the lipase-treated matter of oil and fat to be added to bread is not particularly limited, usually 0.01 to 20 parts by weight, preferably 0.05 to 10 parts by weight as the lipase-treated matter of oil and fat is added per 100 parts by weight of the grain flour which is an ingredient of dough.

Further, when an acid or a culture of a lactic acid bacterium or a treated matter thereof is added, the amount of the acid to be added is 0.01 to 1 parts by weight, preferably 0.01 to 0.5 parts by weight per 100 parts by weight of the grain flour, and that of the culture of a lactic acid bacterium or the treated matter thereof to be added is 0.01 to 20 parts by weight, preferably 0.01 to 10 parts by weight as the culture of a lactic acid bacterium per 100 parts by weight of the grain flour.

Examples of the present invention are shown below.

### Brief Description of the Drawings

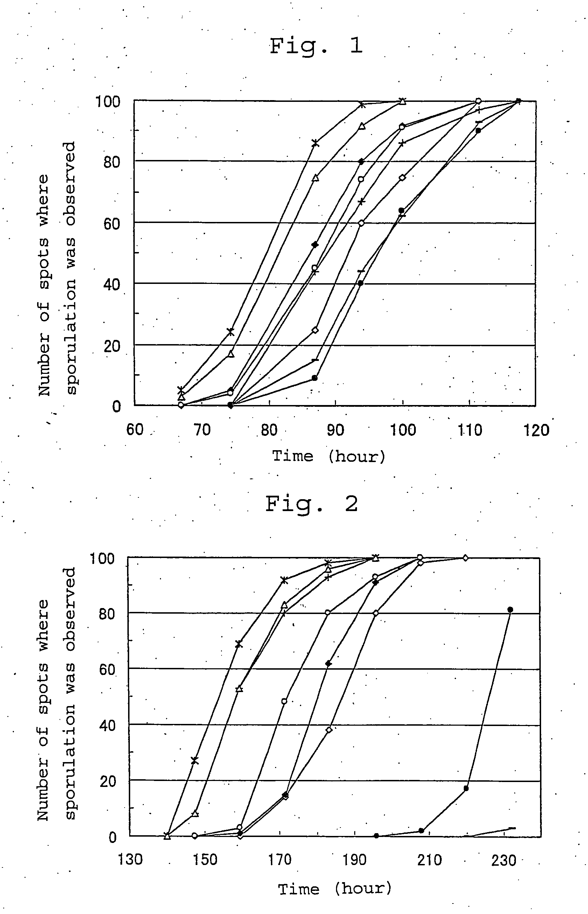

Fig. 1: Fig. 1 shows time-lapse changes in the number of spots where sporulation was observed in control bread and Bread (1) to (7) onto which a suspension of the spores of Aspergillus niger ATCC 6275 was spotted. The numbers on the abscissa indicate the time lapse after spotting and those on the ordinate indicate the number of spots where sporulation was observed. The starting point of the abscissa is the time when the first sporulation was observed. The total number of the spots is 100, which is the total of those on 4 slices of bread.
   In the graph, "*" shows the control bread, "+" shows Bread (1), "◇" shows Bread (2), "-" shows Bread (3), "◆" shows Bread (4), "●" shows Bread (5), "Δ" shows Bread (6) and "○" shows Bread (7).
Fig. 2: Fig. 2 shows time-lapse changes in the number of spots where sporulation was observed in control bread and Bread (1) to (7) onto which a suspension of the spores of Penicillium expansum ATCC 1117 was spotted. The numbers on the abscissa indicate the time lapse after spotting and those on the ordinate indicate the number of spots where sporulation was observed. The starting point of the abscissa is the time when the first sporulation was observed. The total number of the spots is 100, which is the total of those on 4 slices of bread.
   The symbols in the graph have the same meanings as in Fig. 1.

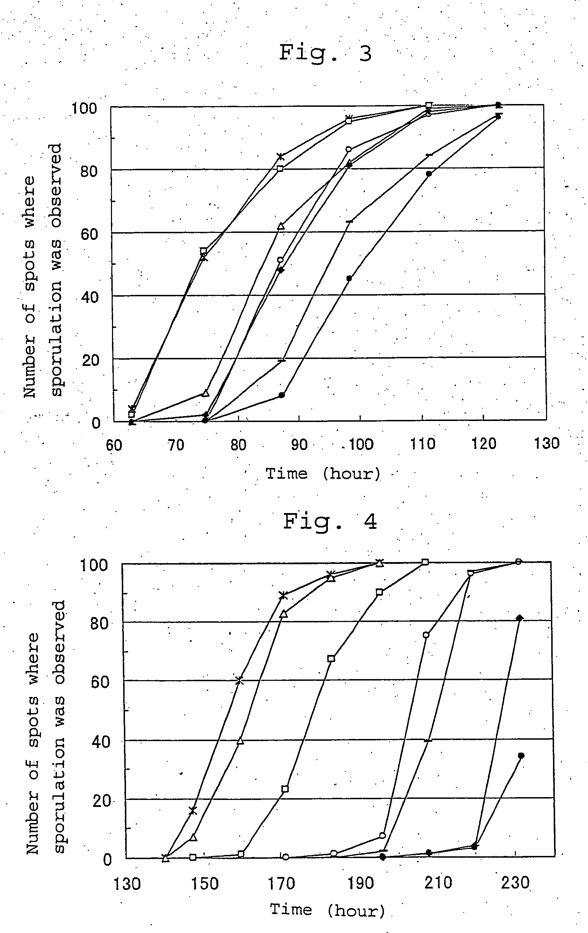

Fig. 3: Fig. 3 shows time-lapse changes in the number of spots where sporulation was observed in control bread and Bread (i) to (vi) onto which a suspension of the spores of Aspergillus niger ATCC 6275 was spotted. The numbers on the abscissa indicate the time lapse after spotting and those on the ordinate indicate the number of spots where sporulation was observed. The starting point of the abscissa is the time when the first sporulation was observed. The total number of the spots is 100, which is the total of those on 4 slices of bread.
   In the graph, "*" shows the control bread, "○" shows Bread (i), "Δ" shows Bread (ii), "□" shows Bread (iii), "-" shows Bread (iv), "◆" shows Bread (v) and "●" shows Bread (vi).
Fig. 4: Fig. 4 shows time-lapse changes in the number of spots where sporulation was observed in control bread and Bread (i) to (vi) onto which a suspension of the spores of Penicillium expansum ATCC 1117 was spotted. The numbers on the abscissa indicate the time lapse after spotting and those on the ordinate indicate the number of spots where sporulation was observed. The starting point of the abscissa is the time when the first sporulation was observed. The total number of the spots is 100, which is the total of those on 4 slices of bread.

### Best Modes for Carrying Out the Invention

### Example 1

Salt-free butter (350 g, Snow Brand Milk Products Co., Ltd.) and 150 ml of water were mixed, and the mixture was maintained at 62°C for 30 minutes to carry out heat sterilization. After the treatment, the mixture was allowed to stand, and when the temperature fell to 42°C, 150,000 U of lipase derived from a microorganism of the genus Candida (Lipase AY "AMANO" 30G, manufactured by Amano Pharmaceutical Co., Ltd.) was added thereto with mixing. The resulting liquid mixture was then emulsified using a homogenizer. The emulsion was allowed to stand at 42°C for 48 hours to carry out lipase treatment. After the lipase treatment, the emulsion was heated at 80°C for 30 minutes to inactivate lipase and the water layer was removed to obtain 270 g of lipase-treated matter of oil and fat A.

### Example 2

Lipase-treated matter of oil and fat B (280 g) was obtained by carrying out the same procedure as in Example 1 except for using 300 g of coconut oil and 200 ml of water.

### Example 3

Strong flour (700 g, Camellia flour, manufactured by Nisshin Flour Milling Inc.), 20 g of yeast (DIA Yeast, manufactured by Kyowa Hakko Kogyo Co., Ltd.), 1 g of yeast food (PAN DIA C-500, manufactured by Kyowa Hakko Kogyo Co., Ltd.) and 420 g of water were mixed together. The obtained mixture was kneaded using a bread mixer (SS-71E, manufactured by Kanto Kongoki Kogyo Co., Ltd.) at a low speed for 3 minutes and at a medium high speed for 2 minutes so that the temperature of the resulting dough was 24°C, and the obtained dough was fermented at 28°C for 4 hours. The dough thus obtained is designated as dough (I).

To dough (I) were added 300 g of strong flour, 50 g of sugar, 20 g of salt, 20 g of skim milk powder and 260 g of water, and the mixture was kneaded at a low speed for 3 minutes and at a medium high speed for 4 minutes. Then, 50 g of shortening was further added to the kneaded dough, and the mixture was kneaded at a low speed for 2 minutes, at a medium high speed for 3 minutes and at a high speed for 4 minutes so that the temperature of the resulting dough was 28°C. The dough thus obtained is designated as dough (II).

Dough (II) was allowed to stand at 25 to 28°C for 20 minutes and then divided to obtain 4 pieces of 220 g each. The pieces of dough were rounded and allowed to stand at 25 to 28°C for 20 minutes, followed by punching. Then, each piece of dough was put in a two-loaf bread mold (Pullman) and fermented at 38°C at 85% relative humidity until the volume of the dough reached 80% of that of the mold. The dough thus obtained is designated as dough (III).

Dough (III) was baked at 210°C for 28 minutes using an oven (Reel Oven ER-6-401, manufactured by Fujisawa Seisakusho Co., Ltd.) to make bread.

The thus obtained bread was used as control in the following experiments.

Loaves of bread were made according to the same process as that of making the control bread except that in the step of making dough (II): 3.0 g of sodium acetate was added to dough (I), the resulting bread being designated as Bread (1); 0.1 g of caproic acid was added to dough (I), the resulting bread being designated as Bread (2); 0.5 g of caproic acid was added to dough (I), the resulting bread being designated as Bread (3); 3.0 g of the lipase-treated matter of oil and fat A obtained in Example 1 was added to dough (I), the resulting bread being designated as Bread (4); 10.0 g of the lipase-treated matter of oil and fat A obtained in Example 1 was added to dough (I), the resulting bread being designated as Bread (5); 3.0 g of the lipase-treated matter of oil and fat B obtained in Example 2 was added to dough (I), the resulting bread being designated as Bread (6); and 10.0 g of the lipase-treated matter of oil and fat B obtained in Example 2 was added to dough (I), the resulting bread being designated as Bread (7).

### Test Example 1

(a) Sensory evaluation was conducted on the control bread and Bread (1) to (7) with respect to the aroma by 15 skilled panelists using 5-point scoring system.

Evaluation was carried out based on the following criteria with the aroma of the control bread designated as 3 points, and t-test was conducted.
5 points: Aroma particularly favorable; 4 points: Aroma favorable; 3 points: Aroma almost equal to that of control; 2 points: Aroma not favorable; 1 point: Aroma particularly unfavorable.

The results are shown in Table 1.

**Table 1**

| Test Bread | Additive | Amount of Addition (g) | Sensory evaluation |
|---|---|---|---|
| Control | None | - | 3.0 |
| Bread (1) | Sodium acetate | 3.0 | 1.9** |
| Bread (2) | Caproic acid | 0.1 | 1.5** |
| Bread (3) | Caproic acid | 0.5 | 1.0** |
| Bread (4) | Lipase-treated matter of oil and fat | 3.0 | 3.3* |
| Bread (5) | Lipase-treated matter of oil and fat | 10.0 | 3.4* |
| Bread (6) | Lipase-treated matter of oil and fat | 3.0 | 3.1 |
| Bread (7) | Lipase-treated matter of oil and fat | 10.0 | 2.9 |

| | | | |
|---|---|---|---|
| *: Significantly different from control with significance level of 5% or less | | | |
| **: Significantly different from control with significance level of 1% or less | | | |

As shown in Table 1, in the loaf of bread to which sodium acetate was added [Bread (1)] and those to which caproic acid was added [Bread (2) and (3)], the aroma was significantly deteriorated compared with that of the bread containing no additive (control), whereas when the lipase-treated matter of oil and fat was added, loaves of bread having an aroma almost equal to that of control [Bread (6) and (7)] or those having a significantly improved aroma [Bread (4) and (5)] were obtained.

(b) Each loaf of bread obtained in Example 3 was cut into slices 17 mm thick.

Four slices of each loaf of bread were used, and a suspension of the spores of Aspergillus niger ATCC 6275 or Penicillium expansum ATCC 1117 prepared by suspending the spores in a 0.1% (v/v) Tween 80 solution at a density of 5 x 10² spores/ml was inoculated onto one side of each slice.

The spore suspension was inoculated onto 25 spots on each slice in an amount of 10 µl per spot.

Aspergillus niger, which is a black mold, and Penicillium expansum, which is a blue mold, are both common molds growing over bread.

The suspensions of the spores of Aspergillus niger ATCC 6275 and those of Penicillium expansum ATCC 1117 were prepared in the following manner.

One loopful of Aspergillus niger ATCC 6275 or Penicillium expansum ATCC 1117 was inoculated on a slant medium prepared by adding 20 g of malt extract, 20 g of glucose, 1 g of peptone and 20 g of agar to 1 l of water and sterilizing the mixture at 120°C for 20 minutes, and cultured at 25°C for 7 days. To the slant medium was added 5 ml of a 0.1% (v/v) Tween 80 solution to suspend the spores. The resulting suspension was centrifuged to collect the spores, which were then washed twice with a 0.1% (v/v) Tween 80 solution. To the washed spores was added 5 ml of a 0.1% (v/v) Tween 80 solution to suspend the spores, and the resulting suspension was passed through a 40 µm cell strainer (manufactured by FALCON) twice. The spore suspension thus obtained was added to a 15% (v/v) glycerol solution to a density of 5 x 10⁶ spores/ml and stored in a frozen state at -80°C until the time of use.

Sporulation on the slices of bread was observed and the time (days) required for sporulation was measured by allowing the slices of bread onto which the spore suspension of Aspergillus niger ATCC 6275 was inoculated to stand at 28°C and those onto which the spore suspension of Penicillium expansum ATCC 1117 was inoculated to stand at 25°C. Observation of the mold was carried out twice a day (morning and evening) and the number of spots where sporulation was confirmed was counted.

Figs. 1 and 2 show time-lapse changes in the number of spots (100 in total) where sporulation was observed. Fig. 1 shows the results when Aspergillus niger was used and Fig. 2 shows the results when Penicillium expansum was used.

As shown in Figs. 1 and 2, in both cases of black mold and blue mold, delay in sporulation was observed by the addition of an additive selected from the lipase-treated matter of oil and fat A, sodium acetate and caproic acid as compared with control. Particularly, considerable delay in sporulation was observed in the cases where 10.0 g of the lipase-treated matter of oil and fat A and 0.5 g of caproic acid were added, respectively.

However, as is clear from the results of the above (a) and (b), when loaves of bread were made by adding sodium acetate and caproic acid, the aroma of the obtained bread [Bread (1), (2) and (3)] was significantly deteriorated compared with that of control, though an anti-mold effect was obtained.

On the other hand, when loaves of bread were made by adding the lipase-treated matter of oil and fat, a sufficient anti-mold effect was obtained as compared with no addition group, and further, the aroma of the obtained bread [Bread (4), (5), (6) and (7)] was equal to or improved compared with that of no addition group.

Although attempts were made to add more than 0.5 g of caproic acid, no experiment on the addition of caproic acid at a concentration higher than 0.5 g was carried out because adverse effects such as delay in the time of bread making were observed.

### Example 4

Loaves of bread were made according to the same process as that of making the control bread in Example 3 except that in the step of making dough (II): 5.0 g of the lipase-treated matter of oil and fat A obtained in Example 1 was added to dough (I), the resulting bread being designated as Bread (i); 7.0 g of a brewed vinegar (high-acid vinegar HDV containing 15 wt% acetic acid, manufactured by Kewpie Jyozo Co., Ltd.) was added to dough (I), the resulting bread being designated as Bread (ii); 30.0 g of the culture of a lactic acid bacterium described below was added to dough (I), the resulting bread being designated as Bread (iii); 5.0 g of the lipase-treated matter of oil and fat A obtained in Example 1 was added, and further 7.0 g of the brewed vinegar was added to dough (I), the resulting bread being designated as Bread (iv); 5.0 g of the lipase-treated matter of oil and fat A obtained in Example 1 was added, and further 30.0 g of the culture of a lactic acid bacterium described below was added to dough (I), the resulting bread being designated as Bread (v); and 5.0 g of the lipase-treated matter of oil and fat A obtained in Example 1 was added, 7.0 g of the brewed vinegar was added, and 30.0 g of the culture of a lactic acid bacterium described below was added to dough (I), the resulting bread being designated as Bread (vi).

The culture of a lactic acid bacterium used was obtained in the following manner.

Skim milk powder (200 g) and 800 g of water were mixed in an Erlenmeyer flask and uniformly dispersed, followed by sterilization by heating at 65°C for 10 minutes. The resulting liquid mixture was cooled to 40°C, to which 10 mg of a freeze-dried lactic acid bacterium (DPL621GRB, manufactured by Kyowa Hi Foods Co., Ltd.) was added, and culturing was carried out by static culture at 40°C for 20 hours. After the culturing, the culture was subjected to heat-sterilization by heating at 85°C for 30 minutes, followed by cooling to obtain 950 g of a culture of a lactic acid bacterium. The thus obtained culture was used as the culture of a lactic acid bacterium.

### Test Example 2

Sensory evaluation was conducted on the loaves of Bread (i) to (vi) obtained in Example 4 in the same manner as shown in Test Example 1 to examine the aroma of the bread, and an anti-mold effect was examined in the same manner as shown in Test Example 1. The loaf of bread obtained in Example 3 was used as control.

Table 2 shows the results of the sensory evaluation and Figs. 3 and 4 show time-lapse changes in the number of spores formed.

**Table 2**

| Additives | | | | |
|---|---|---|---|---|
| | Lipase-treated matter of oil and fat A | Brewed vinegar | Culture of lactic acid bacterium | Sensory evaluation (point) |
| Control | - | - | - | 3.0 |
| Bread (i) | + | - | - | 3.5* |
| Bread (ii) | - | + | - | 1.9** |
| Bread (iii) | - | - | + | 3.2 |
| Bread (iv) | + | + | - | 2.5* |
| Bread (v) | + | - | + | 3.7** |
| Bread (vi) | + | + | + | 3.4* |

| | | | | |
|---|---|---|---|---|
| +: Added -: Not added *: Significantly different from control with significance level of 5% or less | | | | |
| **: Significantly different from control with significance level of 1% or less | | | | |

As shown in Table 2, the aroma of the bread to which only the brewed vinegar was added [Bread (ii)] or of the bread to which the brewed vinegar and the lipase-treated matter of oil and fat were added [Bread (iv)] was significantly bad compared with that of the control bread, but the aroma of Bread (iv) was better than that of Bread (ii). On the other hand, the bread to which only the culture of a lactic acid bacterium was added [Bread (iii)] had an improved aroma compared with control, and the bread to which only the lipase-treated matter of oil and fat was added [Bread (i)], the bread to which the lipase-treated matter of oil and fat and the culture of a lactic acid bacterium were added [Bread (v)] and the bread to which the lipase-treated matter of oil and fat, the brewed vinegar and the culture of a lactic acid bacterium were added [Bread (vi)] had significantly improved aroma compared with control.

As shown in Figs. 3 and 4, an anti-mold effect was observed in any of the loaves of bread to which an additive(s) was added because delay in sporulation was observed. Particularly, a strong anti-mold effect was observed in any of the loaves of bread obtained by adding the lipase-treated matter of oil and fat [Bread (iv), (v) and (vi)].

Thus, when the lipase-treated matter of oil and fat was added, and when the lipase-treated matter of oil and fat was used together with an acid and/or the culture of a lactic acid bacterium, bread with a strong anti-mold effect and improved aroma could be obtained compared with the case of no additive or the cases where only acetic acid or the culture of a lactic acid bacterium was added.

### Example 5

The lipase-treated matter of oil and fat A obtained in Example 1 (20 g) and 80 g of a brewed vinegar (high-acid vinegar HDV containing 15 wt% acetic acid, manufactured by Kewpie Jyozo Co., Ltd., the same applies hereinbelow) are mixed to obtain a mixture containing the lipase-treated matter of oil and fat A and acetic acid. The mixture can be used as an agent for improving the keeping quality of food and drink.

### Example 6

The lipase-treated matter of oil and fat A obtained in Example 1 (20 g), 40 g of the culture of a lactic acid bacterium obtained in Example 4, 30 g of sugar and 10 g of water are mixed to obtain a mixture containing the lipase-treated matter of oil and fat A and the culture of a lactic acid bacterium. The mixture can be used as an agent for improving the keeping quality of food and drink.

### Example 7

The lipase-treated matter of oil and fat A obtained in Example 1 (20 g), 40 g of the culture of a lactic acid bacterium obtained in Example 4 and 40 g of the brewed vinegar are mixed to obtain a mixture containing the lipase-treated matter of oil and fat A, the culture of a lactic acid bacterium and acetic acid. The mixture can be used as an agent for improving the keeping quality of food and drink.

### Example 8

The lipase-treated matter of oil and fat A obtained in Example 1 (40 g) and 60 g of starch (Pineflow, manufactured by Matsutani Chemical Industry Co., Ltd.) are mixed to obtain a mixture containing the lipase-treated matter of oil and fat A. The mixture can be used as an agent for improving the keeping quality of food and drink.

### Example 9

The lipase-treated matter of oil and fat A obtained in Example 1 (40 g) and 60 g of the culture of a lactic acid bacterium obtained in Example 4 are mixed, and the mixture is freeze-dried using a freeze dryer to obtain a freeze-dried product. The freeze-dried product can be used as an agent for improving the keeping quality of food and drink.

### Example 10

A loaf of bread is made in the same manner as in Example 3 except that 10 g of the mixture described in Example 5, 6, 7 or 8 is added.

### Example 11

Somen (Japanese fine wheat noodle), Hiyamugi (Japanese fine wheat noodle thicker than Somen), Udon (Japanese wheat noodle), Soba (Japanese buckwheat noodle) or Chinese noodle is made according to the conventional methods by adding 1 g of the mixture described in Example 5, 6, 7 or 8 per 100 g of flour.

### Example 12

A loaf of bread is made in the same manner as in Example 3 except that 5 g of the freeze-dried product described in Example 9 is added.

### Example 13

Somen, Hiyamugi, Udon, Soba or Chinese noodle is made according to the conventional methods by adding 0.5 g of the mixture described in Example 9 per 100 g of flour.

### Industrial Applicability

According to the present invention, an agent for improving the keeping quality of food and drink that does not adversely affect the flavor of the food and drink, a method for improving the keeping quality of food and drink without adversely affecting the flavor of the food and drink, food and drink having improved keeping quality and a method for producing the food and drink can be provided.

## Claims

1. An agent for improving the keeping quality of food and drink, which contains a lipase-treated matter of oil and fat.

2. The agent for improving the keeping quality according to Claim 1, wherein the oil and fat is animal oil and fat or vegetable oil and fat.

3. The agent for improving the keeping quality according to Claim 2, wherein the animal oil and fat is milk fat.

4. The agent for improving the keeping quality according to Claim 2, wherein the vegetable oil and fat is coconut oil.

5. The agent for improving the keeping quality according to any one of Claims 1 to 4, which contains an acid or a culture of a lactic acid bacterium or a treated matter thereof.

6. The agent for improving the keeping quality according to any one of Claims 1 to 5, wherein the food and drink is bread.

7. The agent for improving the keeping quality according to any one of Claims 1 to 6; wherein the agent for improving the keeping quality is an anti-mold agent.

8. A food and drink comprising the agent for improving the keeping quality according to any one of Claims 1 to 7 added thereto.

9. A method for improving the keeping quality of food and drink, which comprises adding a lipase-treated matter of oil and fat to the food and drink.

10. The method according to Claim 9, wherein the oil and fat is animal oil and fat or vegetable oil and fat.

11. The method according to Claim 10, wherein the animal oil and fat is milk fat.

12. The method according to Claim 10, wherein the vegetable oil and fat is coconut oil.

13. The method according to any one of Claims 9 to 12, which comprises adding an acid or a culture of a lactic acid bacterium or a treated matter thereof.

14. The method according to any one of Claims 9 to 13, wherein the food and drink is bread.

15. The method according to any one of Claims 9 to 14, wherein the method for improving the keeping quality is an anti-mold method.

16. A method for producing food and drink, which comprises adding a lipase-treated matter of oil and fat to the food and drink.

17. The method according to Claim 16, wherein the oil and fat is animal oil and fat or vegetable oil and fat.

18. The method according to Claim 17, wherein the animal oil and fat is milk fat.

19. The method according to Claim 17, wherein the vegetable oil and fat is coconut oil.

20. The method according to any one of Claims 16 to 19, which comprises adding an acid or a culture of a lactic acid bacterium or a treated matter thereof.

21. The method according to any one of Claims 16 to 20, wherein the food and drink is bread.

22. A food and drink obtained by the method according to any one of Claims 16 to 21.

23. Bread containing a lipase-treated matter of oil and fat.

24. The bread according to Claim 23, wherein the oil and fat is animal oil and fat or vegetable oil and fat.

25. The bread according to Claim 24, wherein the animal oil and fat is milk fat.

26. The bread according to Claim 24, wherein the vegetable oil and fat is coconut oil.

27. The bread according to any one of Claims 23 to 26 containing an acid or a culture of a lactic acid bacterium or a treated matter thereof.
